(19) **Europäisches Patentamt / European Patent Office / Office européen des brevets**

(11) **EP 3 495 651 B1**

(12) **FASCICULE DE BREVET EUROPEEN**

(45) Date de publication et mention
de la délivrance du brevet:
**28.10.2020 Bulletin 2020/44**

(51) Int Cl.:
***F02K 1/72*** *(2006.01)*

(21) Numéro de dépôt: **18205712.5**

(22) Date de dépôt: **12.11.2018**

(54) **GRILLE POUR LA FORMATION D'UN FLUX D'INVERSION D'UN TURBORÉACTEUR D'AÉRONEF**

GITTER ZUR ERZEUGUNG EINER UMKEHRSTRÖMUNG EINES
LUFTFAHRZEUG-TURBOTRIEBWERKS

SCREEN FOR FORMING A REVERSAL FLOW OF A JET ENGINE OF AN AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.12.2017 FR 1761914**

(43) Date de publication de la demande:
**12.06.2019 Bulletin 2019/24**

(73) Titulaire: **Airbus Operations S.A.S.**
**31060 Toulouse (FR)**

(72) Inventeurs:
• **VAUCOULOUX, Quentin**
**31830 Plaisance du Touch (FR)**

• **CUSSET, Romain**
**31300 Toulouse (FR)**
• **BOURDEAU, Christophe**
**31300 Toulouse (FR)**

(74) Mandataire: **Gicquel, Olivier Yves Gérard**
**Airbus Opérations (S.A.S)**
**XIF - M0101/1**
**316, route de Bayonne**
**31060 Toulouse Cedex (FR)**

(56) Documents cités:
EP-A2- 2 581 593        US-A- 3 024 604
US-A1- 2013 051 996     US-A1- 2016 341 150
US-A1- 2017 058 829

**Description**

La présente invention concerne une grille pour la formation d'un flux d'inversion d'un turboréacteur double flux d'un aéronef, un turboréacteur double flux comportant au moins une telle grille, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur sous forme d'un noyau et une nacelle qui est fixée autour du moteur à une structure fixe du turboréacteur. Entre le moteur et la nacelle, le turboréacteur présente une veine secondaire dans laquelle s'écoule de l'amont vers l'aval, un flux secondaire provenant d'une soufflante disposée en amont du moteur.

La nacelle comporte un capot fixe par rapport à la structure fixe et en aval, un capot mobile qui se déplace en translation vers l'arrière pour libérer une fenêtre entre le capot mobile et le capot fixe et qui permet le passage entre la veine secondaire et l'extérieur.

Dans le même temps, un ou plusieurs volets inverseurs se déplacent d'une position inactive à une position active. Dans la position inactive, le volet inverseur est en dehors de la veine secondaire et n'empêche pas l'écoulement du flux secondaire. Dans la position active, le volet inverseur est en travers de la veine secondaire et dirige le flux secondaire de la veine secondaire vers la fenêtre et donc vers l'extérieur.

Les déplacements du capot mobile et des volets inverseurs sont réalisés par un système de commande comportant par exemple des vérins et des tringles.

De manière connue, par exemple du document US2016/341150, des grilles, appelées également « cascades » sont disposées en travers de la fenêtre, et guident au mieux le flux sortant par la fenêtre pour améliorer l'efficacité de l'inverseur en contrôlant de manière plus précise la direction du flux secondaire dévié.

Les grilles se présentent sous la forme d'ailettes profilées qui dévient le flux secondaire. Chaque ailette présente un profil courbe dont l'arrondi est orienté vers l'arrière et dont le centre de courbure est à l'avant par rapport à l'ailette. Si les ailettes permettent une bonne déviation du flux secondaire vers l'avant, le flux d'air en sortie de la grille a tendance à se séparer au niveau du bord de fuite de chaque ailette, ce qui tend à réduire la performance de la grille.

Pour assurer un meilleur rendement de ces grilles, il est nécessaire de trouver des formes d'ailettes plus performantes du point de vue aérodynamique et du point de vue du poids.

Un objet de la présente invention est de proposer une grille pour la formation d'un flux d'inversion d'un turboréacteur double flux d'un aéronef.

A cet effet, est proposée une grille pour la formation d'un flux d'inversion d'un turboréacteur double flux telle que revendiquée à la revendication 1.

Une telle grille permet une réduction du poids tout en assurant une déviation performante.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 est une vue de côté d'un aéronef comportant un turboréacteur double flux selon l'invention,
la Fig. 2 est une vue en coupe par un plan médian du turboréacteur selon l'invention en position fermée,
la Fig. 3 est une vue en coupe similaire à celle de la Fig. 2 en position ouverte,
la Fig. 4 montre une vue de côté d'une grille selon l'invention,
la Fig. 5 montre un agrandissement d'une partie de la grille de la Fig. 4, et
la Fig. 6 montre une vue de côté d'une grille selon différents modes de réalisation.

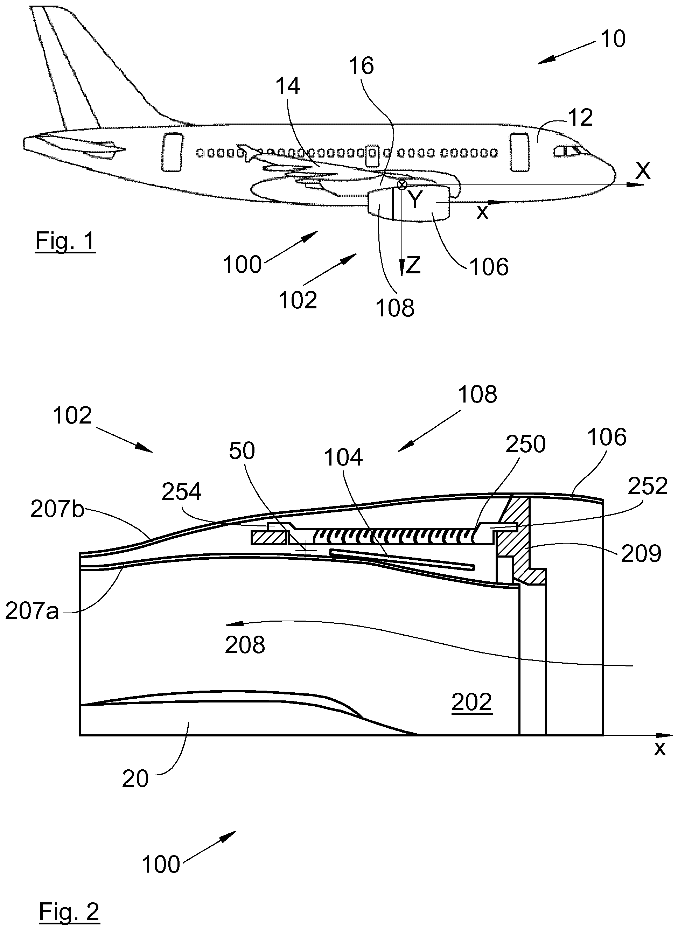

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Dans la description qui suit, et par convention, on appelle x l'axe longitudinal de la nacelle 102 et du turboréacteur double flux 100 qui est globalement parallèle à l'axe longitudinal X de l'aéronef 10 ou axe de roulis, orienté positivement dans le sens d'avancement de l'aéronef 10, on appelle Y l'axe transversal ou axe de tangage de l'aéronef qui est horizontal lorsque l'aéronef est au sol, et Z l'axe vertical ou hauteur verticale ou axe de lacet lorsque l'aéronef est au sol, ces trois directions X, Y et Z étant orthogonales entre elles et formant un repère orthonormé ayant pour origine le centre de gravité de l'aéronef.

Le turboréacteur double flux 100 comporte une nacelle 102 qui comporte à l'avant un capot fixe 106 et à l'arrière du capot fixe 106 par rapport à l'axe longitudinal x, un capot mobile 108.

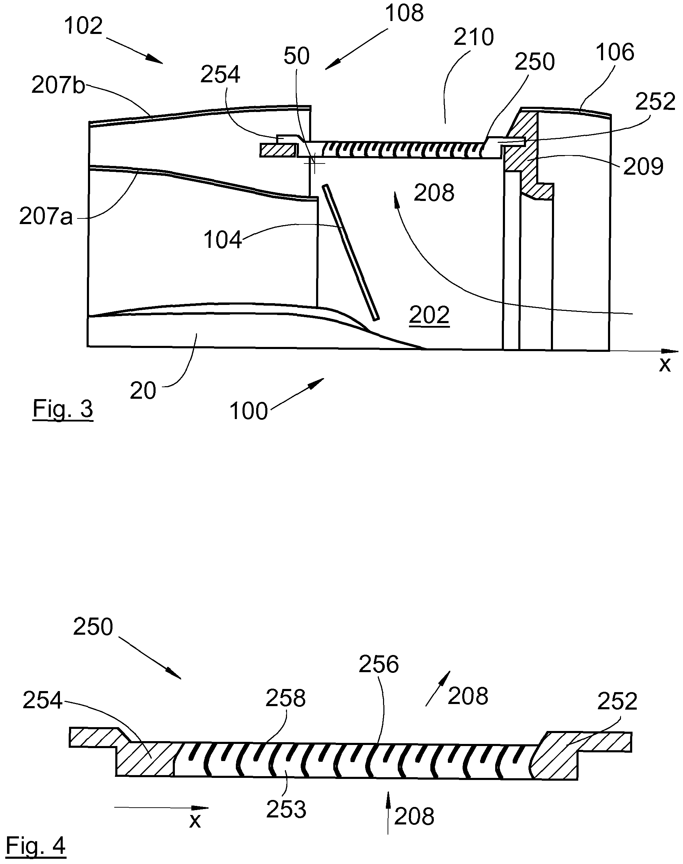

Comme cela est montré sur les Figs. 2 et 3, le turboréacteur double flux 100 comporte un moteur 20 sous forme d'un noyau qui est logé à l'intérieur de la nacelle 102. Le turboréacteur 100 présente une veine 202 délimitée entre la nacelle 102 et le moteur 20 et dans laquelle circule un flux secondaire 208 provenant d'une soufflante en amont.

Le capot fixe 106 est monté fixe sur une structure fixe 209 de la nacelle 102 et constitue une paroi extérieure de la nacelle 102.

Le capot mobile 108 est monté mobile en translation sur la structure fixe 209 selon une direction de translation globalement parallèle à l'axe longitudinal x. La translation est réalisée par tous moyens appropriés comme par exemple des glissières et par tous systèmes d'actionnement comme par exemple des vérins ou des moteurs.

Dans le mode de réalisation de l'invention présenté ici, le capot mobile 108 comporte une paroi intérieure 207a et une paroi extérieure 207b qui entoure la paroi intérieure 207a.

Le capot mobile 108 est mobile entre une position de fermeture (Fig. 2) dans laquelle le capot mobile 108 est contre le capot fixe 106 et une position d'ouverture (Fig. 3) dans laquelle le capot mobile 108 est éloigné du capot fixe 106 vers l'arrière de manière à ouvrir une fenêtre 210 ouverte sur l'extérieur de la nacelle 102 et qui ouvre un passage entre la veine secondaire 202 et l'extérieur. En position de fermeture, le capot fixe 106 et la paroi extérieure 207b se prolongent pour former l'enveloppe extérieure de la nacelle 102 et pour obturer la fenêtre 210, et en position d'ouverture, le capot fixe 106 et la paroi extérieure 207b sont éloignés l'un de l'autre.

Dans le même temps, en position de fermeture, la paroi intérieure 207a vient en contact avec la structure fixe 209 et constitue une paroi extérieure de la veine secondaire 202, et en position d'ouverture, la paroi intérieure 207a est éloignée de la structure fixe 209 de manière à ouvrir le passage entre la veine secondaire 202 et la fenêtre 210.

La nacelle 102 comporte au moins un volet inverseur 104. En particulier, il peut y avoir deux volets inverseurs 104 disposés l'un en face de l'autre, ou plusieurs, par exemple quatre, volets inverseurs 104 répartis régulièrement sur la périphérie de la nacelle 102.

Le système d'inversion de poussée qui est décrit ici ne l'est qu'à titre illustratif et l'invention peut s'appliquer à tout type d'inverseur de poussée pour lequel des cascades sont utilisées afin d'augmenter le rendement de la poussée vers l'avant de la nacelle.

En outre, ici l'invention est plus particulièrement décrite pour un volet inverseur 104, mais elle s'applique de la même manière pour chaque volet inverseur 104 lorsqu'il y en a plusieurs.

Dans le mode de réalisation de l'invention présenté ici, le volet inverseur 104 est disposé entre la paroi intérieure 207a et la paroi extérieure 207b en position de fermeture.

Le volet inverseur 104 est monté libre en rotation autour d'un axe de rotation 50 sur la structure fixe de la nacelle 102 entre une position inactive (Fig. 2) dans laquelle il n'est pas dans la veine 202 et une position active (Fig. 3) dans laquelle il obture au moins en partie la veine 202.

Lorsque le capot mobile 108 est en position de fermeture, le volet inverseur 104 est en position inactive, et lorsque le capot mobile 108 est en position d'ouverture, le volet inverseur 104 est en position active de manière à dévier au moins une partie du flux secondaire 208 vers l'extérieur de la nacelle 102.

Le déplacement du volet inverseur 104 est lié au déplacement du capot mobile 108. Le déplacement du volet inverseur 104 est commandé par tous moyens appropriés comme par exemple un système de tringlerie, des vérins ou des moteurs.

Ainsi, en position d'ouverture du capot mobile 108 et en position active du volet inverseur 104, le flux secondaire 208 est dévié vers l'extérieur à travers la fenêtre 210.

Pour chaque fenêtre 210, la nacelle 102 est équipée de grilles 250 qui permettent la formation d'un flux d'inversion du turboréacteur 100 à partir du flux secondaire 208, également connues sous le terme « cascades » qui sont disposées en travers de la fenêtre 210 pour améliorer l'efficacité de l'inverseur en contrôlant de manière plus précise la direction d'un flux secondaire 208 dévié et en particulier en l'orientant vers l'avant de la nacelle 102. La Fig. 4 montre la grille 250 seule et en coupe.

Le nombre de grilles 250 par fenêtre 210 varie selon les dimensions des grilles 250 et de la fenêtre 210. Dans la description qui suit, l'invention est plus particulièrement décrite pour une grille 250, mais elle s'applique de la même manière pour chaque grille 250 lorsqu'il y en a plusieurs.

La grille 250 prend la forme d'un cadre présentant un bord amont 252 et un bord aval 254 parallèle au bord amont 252, ainsi que des bords latéraux 253 perpendiculaires aux bords amont 252 et aval 254. La grille 250 est fixée à la structure fixe de la nacelle 102 par exemple par des vis.

A l'intérieur du cadre, la grille 250 présente des ailettes 256 d'un premier type et des ailettes 258 d'un deuxième type, où chaque ailette 256, 258 d'un des deux types est intercalée entre deux ailettes 258, 256 de l'autre type en progressant le long de l'axe longitudinal x, c'est-à-dire de l'avant vers l'arrière du turboréacteur 100.

Chaque ailette 256 du premier type présente un profil courbe dont l'arrondi est orienté vers l'arrière du turboréacteur 100 et dont le centre de courbure est à l'avant par rapport à l'ailette 256 du premier type. Chaque ailette 256 du premier type permet donc de dévier le flux secondaire 208 vers l'avant.

Chaque ailette 258 du deuxième type présente également un profil courbe dont l'arrondi est orienté vers l'arrière du turboréacteur 100 et dont le centre de courbure est à l'avant par rapport à l'ailette 258 du deuxième type, mais dont la corde est plus petite que la corde des ailettes 256 du premier type.

Ainsi, vis-à-vis du flux secondaire 208 entrant dans la grille 250, chaque ailette 258 du deuxième type présente une prise à l'air qui est inférieure à la prise à l'air des ailettes 256 du premier type. Les ailettes 258 du deuxième type étant plus petites que les ailettes 256 du premier type, elles sont moins lourdes d'où un gain de poids, et elles permettent, en réduisant la surface de sortie du flux secondaire 208, de créer une section convergente et d'accélérer le flux secondaire 208 en sortie de la grille 250 et ainsi de réduire la séparation du flux d'air au niveau des ailettes 256 du premier type.

Les bords de fuite des ailettes 256 du premier type et les bords de fuite des ailettes 258 du deuxième type sont alignés selon une direction globalement parallèle à l'axe longitudinal x. En d'autres termes, les bords de fuite de toutes les ailettes 256 et 258 sont toutes dans un même plan de sortie globalement parallèle à l'axe longitudinal x.

*A contrario*, les bords d'attaque des ailettes 256 du premier type et les bords d'attaque des ailettes 258 du deuxième type ne sont pas alignés selon une direction globalement parallèle à l'axe longitudinal X. Les bords d'attaque des ailettes 256 du premier type sont tous dans un même plan d'entrée parallèle au plan de sortie et le bord d'attaque de chaque ailette 258 du deuxième type est dans un plan intermédiaire entre le plan d'entrée et le plan de sortie et à distance de chacun d'eux.

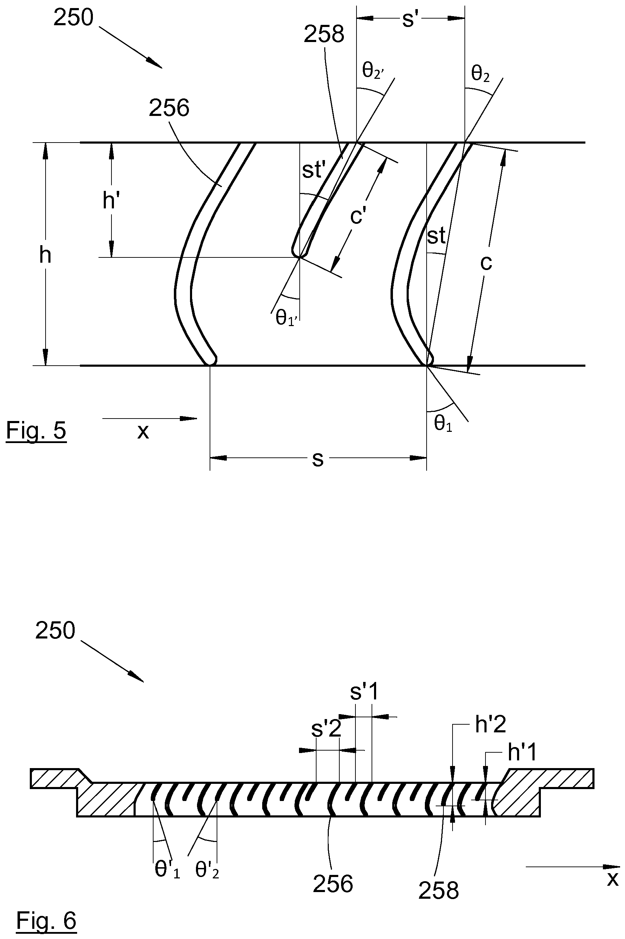

La Fig. 5 montre un agrandissement de la grille 250 où :

« c » est la corde des ailettes 256 du premier type,

« c' » est la corde des ailettes 258 du deuxième type,

« s » est la distance entre deux ailettes 256 du premier type consécutives dans le sens de l'avant vers l'arrière,

« s' » est la distance entre une ailette 256 du premier type et une ailette 258 du deuxième type consécutive dans le sens de l'avant vers l'arrière,

« h » est la hauteur des ailettes 256 du premier type,

« h' » est la hauteur des ailettes 258 du deuxième type,

« $\theta_1$ » est l'angle d'entrée entre la tangente à la courbure du bord d'attaque des ailettes 256 du premier type et l'axe vertical,

« $\theta_{1'}$ » est l'angle d'entrée entre la tangente à la courbure du bord d'attaque des ailettes 258 du deuxième type et l'axe vertical,

« $\theta_2$ » est l'angle de sortie entre la tangente à la courbure du bord de fuite des ailettes 256 du premier type et l'axe vertical,

« $\theta_{2'}$ » est l'angle de sortie entre la tangente à la courbure du bord de fuite des ailettes 258 du deuxième type et l'axe vertical,

« st » est l'angle de décalage des ailettes 256 du premier type, c'est-à-dire l'angle entre la corde et l'axe vertical, et

« st' » est l'angle de décalage des ailettes 258 du deuxième type, c'est-à-dire l'angle entre la corde et l'axe vertical.

L'axe vertical est ici pris en référence aux Figs. 2 à 6, mais cet axe est plus généralement une direction axiale du turboréacteur double flux 100. En outre, différentes lois d'épaisseur peuvent s'appliquer au profil des ailettes.

Selon l'invention, les ailettes 256 du premier type et les ailettes 258 du deuxième type sont telles que :

$$0,2 \times s \leq s' \leq 0,8 \times s \;;$$

$$0,2 \times h \leq h' \leq 0,8 \times h \;; \text{ avec } 30 \, mm \leq h \leq 70 \, mm \;;$$

$$-1,5 \times \theta_1 \leq \theta_{1'} \leq 1,5 \times \theta_1 \;; \text{ avec } -10° \leq \theta_1 \leq 70° \;;$$

$$-1,5 \times \theta_2 \leq \theta_{2'} \leq 1,5 \times \theta_2 \;; \text{ avec } 0° \leq \theta_2 \leq 50° \;;$$

$$c' = \frac{h'}{\cos(st')} \text{ avec } 0° \leq st' \leq \theta_{2'} \;;$$

et

$$0,5 \leq \frac{c}{s} \leq 2 \text{ ; avec } c = \frac{h}{\cos(st)} \text{ et } 0° \leq st \leq \theta_2.$$

La Fig. 6 montre différentes variantes qui peuvent être mises en œuvre indépendamment les unes des autres ou en combinaison les unes avec les autres.

Selon une première variante, les hauteurs des ailettes 258 du deuxième type varient d'une ailette 258 du deuxième type à une autre ailette 258 du deuxième type. Ces variations sont représentées par des hauteurs $h_1'$, $h_2'$ différentes.

Selon une deuxième variante, la distance entre une ailette 256 du premier type et l'ailette 258 du deuxième type consécutive dans le sens de l'avant vers l'arrière, est différente de la distance entre une autre ailette 256 du premier type et l'ailette 258 du deuxième type consécutive dans le sens de l'avant vers l'arrière à cette autre ailette 256 du premier type. Ces variations sont représentées par des distances $s_1'$, $s_2'$ différentes.

Selon une troisième variante, les angles d'entrée des ailettes 258 du deuxième type varient d'une ailette 258 du deuxième type à une autre ailette 258 du deuxième type. Ces variations sont représentées par des angles $\theta_1'$, $\theta_2'$ différents.

## Revendications

1. Grille (250) pour la formation d'un flux d'inversion d'un turboréacteur double flux (100) présentant un avant et un arrière, ladite grille (250) comportant des ailettes (256) d'un premier type présentant un profil courbe dont l'arrondi est destiné à être orienté vers l'arrière et dont le centre de courbure est à l'avant par rapport à l'ailette (256) du premier type, ladite grille (250) comportant des ailettes (258) d'un deuxième type, en ce que chaque ailette (256, 258) d'un des deux types est intercalée entre deux ailettes (258, 256) de l'autre type en progressant de l'avant vers l'arrière, en ce que chaque ailette (258) du deuxième type présente un profil courbe dont l'arrondi est destiné à être orienté vers l'arrière et dont le centre de courbure est à l'avant par rapport à l'ailette (258) du deuxième type, et en ce que la corde des ailettes (258) du deuxième type est plus petite que la corde des ailettes (256) du premier type, **caractérisée en ce que** :

$$0,2 \times s \leq s' \leq 0,8 \times s \text{ ;}$$

$$0,2 \times h \leq h' \leq 0,8 \times h \text{ ; avec } 30 \; mm \leq h \leq 70 \; mm \text{ ;}$$

$$-1,5 \times \theta_1 \leq \theta_{1'} \leq 1,5 \times \theta_1 \text{ ; avec } -10° \leq \theta_1 \leq 70° \text{ ;}$$

$$-1,5 \times \theta_2 \leq \theta_{2'} \leq 1,5 \times \theta_2 \text{ ; avec } 0° \leq \theta_2 \leq 50° \text{ ;}$$

$$c' = \frac{h'}{\cos(st')} \text{ avec } 0° \leq st' \leq \theta_{2'} \text{ ;}$$

et

$$0,5 \leq \frac{c}{s} \leq 2 \text{ ; avec } c = \frac{h}{\cos(st)} \text{ et } 0° \leq st \leq \theta_2 \text{ ;}$$

où « c » est la corde des ailettes (256) du premier type,
« c' » est la corde des ailettes (258) du deuxième type,
« s » est la distance entre deux ailettes (256) du premier type consécutives,
« s' » est la distance entre une ailette (256) du premier type et une ailette (258) du deuxième type consécutive,

« h » est la hauteur des ailettes (256) du premier type,

« h' » est la hauteur des ailettes (258) du deuxième type,

« $\theta_1$ » est l'angle d'entrée entre la tangente à la courbure du bord d'attaque des ailettes (256) du premier type et l'axe vertical,

« $\theta_{1'}$ » est l'angle d'entrée entre la tangente à la courbure du bord d'attaque des ailettes (258) du deuxième type et l'axe vertical,

« $\theta_2$ » est l'angle de sortie entre la tangente à la courbure du bord de fuite des ailettes (256) du premier type et l'axe vertical,

« $\theta_{2'}$ » est l'angle de sortie entre la tangente à la courbure du bord de fuite des ailettes (258) du deuxième type et l'axe vertical,

« st » est l'angle de décalage des ailettes (256) du premier type, et

« st' » est l'angle de décalage des ailettes (258) du deuxième type.

2. Grille (250) selon la revendication 1, **caractérisée en ce que** les bords de fuite des ailettes (256) du premier type et les bords de fuite des ailettes (258) du deuxième type sont dans un même plan de sortie.

3. Grille (250) selon la revendication 2, **caractérisée en ce que** les bords d'attaque des ailettes (256) du premier type sont dans un même plan d'entrée parallèle au plan de sortie, et **en ce que** le bord d'attaque de chaque ailette (258) du deuxième type est dans un plan intermédiaire entre le plan d'entrée et le plan de sortie et à distance de chacun d'eux.

4. Grille (250) selon l'une des revendications précédentes, **caractérisée en ce que** les hauteurs des ailettes (258) du deuxième type varient d'une ailette (258) du deuxième type à une autre ailette (258) du deuxième type.

5. Grille (250) selon l'une des revendications précédentes, **caractérisée en ce que** la distance entre une ailette (256) du premier type et l'ailette (258) du deuxième type consécutive dans le sens de l'avant vers l'arrière, est différente de la distance entre une autre ailette (256) du premier type et l'ailette (258) du deuxième type consécutive dans le sens de l'avant vers l'arrière à cette autre ailette (256) du premier type.

6. Grille (250) selon l'une des revendications précédentes, **caractérisée en ce que** les angles d'entrée des ailettes (258) du deuxième type varient d'une ailette (258) du deuxième type à une autre ailette (258) du deuxième type.

7. Turboréacteur double flux (100) comportant au moins une grille (250) pour la formation d'un flux d'inversion selon l'une des revendications précédentes.

8. Aéronef (10) comportant au moins un turboréacteur double flux (100) selon la revendication précédente.

**Patentansprüche**

1. Gitter (250) zur Bildung einer Umkehrströmung eines Zweistrom-Turbostrahltriebwerks (100), das eine Vorder- und eine Rückseite aufweist, wobei das Gitter (250) Lamellen (256) eines ersten Typs aufweist, die ein gekrümmtes Profil aufweisen, dessen Rundung dazu bestimmt ist, nach hinten ausgerichtet zu sein und dessen Krümmungsmitte bezüglich der Lamelle (256) des ersten Typs vorne ist, wobei das Gitter (250) Lamellen (258) eines zweiten Typs aufweist, wobei jede Lamelle (256, 258) eines der zwei Typen von vorne nach hinten zwischen zwei Lamellen (258, 256) des anderen Typs eingefügt ist, wobei jede Lamelle (258) des zweiten Typs ein gekrümmtes Profil aufweist, dessen Rundung dazu bestimmt ist, nach hinten ausgerichtet zu sein, und dessen Krümmungsmitte bezüglich der Lamelle (258) des zweiten Typs vorne ist, und wobei die Sehne der Lamellen (258) des zweiten Typs kleiner ist als die Sehne der Lamellen (256) des ersten Typs, **dadurch gekennzeichnet, dass** gilt:

$$0{,}2 \times s \leq s' \leq 0{,}8 \times s;$$

$$0{,}2 \times h \leq h' \leq 0{,}8 \times h; \text{ mit } 30 \text{ mm} \leq h \leq 70 \text{ mm};$$

$$-1,5 \times \theta_1 \leq \theta_{1'} \leq 1,5 \times \theta_1; \text{ mit } -10° \leq \theta_1 \leq 70°;$$

$$-1,5 \times \theta_2 \leq \theta_{2'} \leq 1,5 \times \theta_2; \text{ mit } 0° \leq \theta_2 \leq 50°;$$

$$c' = \frac{h'}{cos(st')} \text{ mit } 0° \leq st' \leq \theta_{2'};$$

und

$$0,5 \leq \frac{c}{s} \leq 2; \text{ mit } c = \frac{h}{cos(st)} \text{ und } 0° \leq st \leq \theta_2;$$

wobei "c" die Sehne der Lamellen (256) des ersten Typs ist,
"c'" die Sehne der Lamellen (258) des zweiten Typs ist,
"s" der Abstand zwischen zwei aufeinanderfolgenden Lamellen (256) des ersten Typs ist,
"s'" der Abstand zwischen einer Lamelle (256) des ersten Typs und einer darauffolgenden Lamelle (258) des zweiten Typs ist,
"h" die Höhe der Lamellen (256) des ersten Typs ist,
"h'" die Höhe der Lamellen (258) des zweiten Typs ist, "$\theta_1$" der Eingangswinkel zwischen der Tangente an der Krümmung der Vorderkante der Lamellen (256) des ersten Typs und der senkrechten Achse ist,
"$\theta_{1'}$" der Eingangswinkel zwischen der Tangente an der Krümmung der Vorderkante der Lamellen (258) des zweiten Typs und der senkrechten Achse ist,
"$\theta_2$" der Ausgangswinkel zwischen der Tangente an der Krümmung der Hinterkante der Lamellen (256) des ersten Typs und der senkrechten Achse ist,
"$\theta_{2'}$" der Ausgangswinkel zwischen der Tangente an der Krümmung der Hinterkante der Lamellen (258) des zweiten Typs und der senkrechten Achse ist,
"st" der Versatzwinkel der Lamellen (256) des ersten Typs ist, und
"st'" der Versatzwinkel der Lamellen (258) des zweiten Typs ist.

2. Gitter (250) nach Anspruch 1, **dadurch gekennzeichnet, dass** die Hinterkanten der Lamellen (256) des ersten Typs und die Hinterkanten der Lamellen (258) des zweiten Typs sich in einer gleichen Ausgangsebene befinden.

3. Gitter (250) nach Anspruch 2, **dadurch gekennzeichnet, dass** die Vorderkanten der Lamellen (256) des ersten Typs sich in einer gleichen Eingangsebene parallel zur Ausgangsebene befinden, und dass die Vorderkante jeder Lamelle (258) des zweiten Typs sich in einer Zwischenebene zwischen der Eingangsebene und der Ausgangsebene und in Abstand zu jeder von ihnen befindet.

4. Gitter (250) nach einem der vorhergehenden Ansprüche, **dadurch gekennzeichnet, dass** die Höhen der Lamellen (258) des zweiten Typs von einer Lamelle (258) des zweiten Typs zu einer anderen Lamelle (258) des zweiten Typs variieren.

5. Gitter (250) nach einem der vorhergehenden Ansprüche, **dadurch gekennzeichnet, dass** der Abstand zwischen einer Lamelle (256) des ersten Typs und der folgenden Lamelle (258) des zweiten Typs in Richtung von vorne nach hinten anders ist als der Abstand zwischen einer anderen Lamelle (256) des ersten Typs und der folgenden Lamelle (258) des zweiten Typs in Richtung von vorne nach hinten zu dieser anderen Lamelle (256) des ersten Typs.

6. Gitter (250) nach einem der vorhergehenden Ansprüche, **dadurch gekennzeichnet, dass** die Eingangswinkel der Lamellen (258) des zweiten Typs von einer Lamelle (258) des zweiten Typs zu einer anderen Lamelle (258) des zweiten Typs variieren.

7. Zweistrom-Turbostrahltriebwerk (100), das mindestens ein Gitter (250) zum Bilden einer Umkehrströmung nach einem der vorhergehenden Ansprüche aufweist.

8. Luftfahrzeug (10), das mindestens ein Zweistrom-Turbostrahltriebwerk (100) nach dem vorhergehenden Anspruch aufweist.

**Claims**

1. Screen (250) for forming a reversal flow of a turbofan engine (100) having a front and a rear, said screen (250) comprising fins (256) of a first type having a curved profile, the rounded part of which is intended to be oriented to the rear, and the centre of curvature of which is to the front with respect to the fin (256) of the first type, said screen (250) comprising fins (258) of a second type, in that each fin (256, 258) of one of the two types is interposed between two fins (258, 256) of the other type, progressing from forward to aft, in that each fin (258) of the second type has a curved profile, the rounded part of which is intended to be oriented to the rear, and the centre of curvature of which is to the front with respect to the fin (258) of the second type, and in that the chord of the fins (258) of the second type is shorter than the chord of the fins (256) of the first type, **characterized in that**:

$$0.2 \times s \leq s' \leq 0.8 \times s;$$

$$0.2 \times h \leq h' \leq 0.8 \times h; \quad \text{with} \quad 30\,mm \leq h \leq 70\,mm;$$

$$-1.5 \times \theta_1 \leq \theta_{1'} \leq 1.5 \times \theta_1; \quad \text{with} \quad -10° \leq \theta_1 \leq 70°;$$

$$-1.5 \times \theta_2 \leq \theta_{2'} \leq 1.5 \times \theta_2; \quad \text{with} \quad 0° \leq \theta_2 \leq 50°;$$

$$c' = \frac{h'}{\cos(st')} \quad \text{with} \quad 0° \leq st' \leq \theta_{2'};$$

and

$$0.5 \leq \frac{c}{s} \leq 2; \quad \text{with} \quad c = \frac{h}{\cos(st)} \quad \text{and} \quad 0° \leq st \leq \theta_2;$$

where

   $c$ is the chord of the fins (256) of the first type,
   $c'$ is the chord of the fins (258) of the second type,
   $s$ is the distance between two consecutive fins (256) of the first type,
   $s'$ is the distance between a fin (256) of the first type and a consecutive fin (258) of the second type,
   $h$ is the height of the fins (256) of the first type,
   $h'$ is the height of the fins (258) of the second type,
   $\theta_1$ is the inlet angle between the tangent to the curvature of the leading edge of the fins (256) of the first type and the vertical axis,
   $\theta_{1'}$ is the inlet angle between the tangent to the curvature of the leading edge of the fins (258) of the second type and the vertical axis,
   $\theta_2$ is the outlet angle between the tangent to the curvature of the trailing edge of the fins (256) of the first type and the vertical axis,
   $\theta_{2'}$ is the outlet angle between the tangent to the curvature of the trailing edge of the fins (258) of the second type and the vertical axis,
   $st$ is the offset angle of the fins (256) of the first type, and
   $st'$ is the offset angle of the fins (258) of the second type.

2. Screen (250) according to Claim 1, **characterized in that** the trailing edges of the fins (256) of the first type and the trailing edges of the fins (258) of the second type are in one and the same outlet plane.

3.  Screen (250) according to Claim 2, **characterized in that** the leading edges of the fins (256) of the first type are in one and the same inlet plane, which is parallel to the outlet plane, and **in that** the leading edge of each fin (258) of the second type is in an intermediate plane between the inlet plane and the outlet plane, at a distance from each of these.

4.  Screen (250) according to one of the preceding claims, **characterized in that** the heights of the fins (258) of the second type vary from one fin (258) of the second type to another fin (258) of the second type.

5.  Screen (250) according to one of the preceding claims, **characterized in that** the distance between a fin (256) of the first type and the following fin (258) of the second type, in the direction from forward to aft, is different from the distance between another fin (256) of the first type and the following fin (258) of the second type, in the direction from forward to aft at this other fin (256) of the first type.

6.  Screen (250) according to one of the preceding claims, **characterized in that** the inlet angles of the fins (258) of the second type vary from one fin (258) of the second type to another fin (258) of the second type.

7.  Turbofan engine (100) comprising at least one screen (250) for forming a reversal flow according to any one of the preceding claims.

8.  Aircraft (10) comprising at least one turbofan engine (100) according to the preceding claim.

Fig. 1

Fig. 2

102
207b
254
50
108
210
250
106
207a
104
252
209
208
202
20
100
x

Fig. 3

250
254
258
256
208
252
253
208
x

Fig. 4

Fig. 5

Fig. 6

**EP 3 495 651 B1**

**RÉFÉRENCES CITÉES DANS LA DESCRIPTION**

**Documents brevets cités dans la description**

- US 2016341150 A